Europäisches Patentamt

European Patent Office

Office européen des brevets

(11) Publication number: **0 039 187**
**B1**

# EUROPEAN PATENT SPECIFICATION

(45) Date of publication of patent specification: **24.07.85**

(51) Int. Cl.⁴: **G 01 F 23/22**

(21) Application number: **81301714.2**

(22) Date of filing: **16.04.81**

(54) **Liquid level indicator.**

(30) Priority: **28.04.80 US 144267**

(43) Date of publication of application:
· **04.11.81 Bulletin 81/44**

(45) Publication of the grant of the patent:
**24.07.85 Bulletin 85/30**

(84) Designated Contracting States:
**DE FR GB IT SE**

(56) References cited:
**GB-A- 996 822**
**GB-A-1 497 050**
**US-A-3 442 127**
**US-A-3 535 934**
**US-A-3 570 311**
**US-A-4 074 025**

(73) Proprietor: **ECONOMICS LABORATORY, INC.**
**370 Wabasha Avenue Osborn Building**
**Saint Paul, MN 55102 (US)**

(72) Inventor: **Mizuno, William G.**
**1541 East Sixth Street**
**St. Paul Minnesota 55106 (US)**

(74) Representative: **Laredo, Jack Joseph et al**
**Elkington and Fife High Holborn House 52/54**
**High Holborn**
**London, WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to liquid level indicators. More particularly, the present invention relates to an improved liquid level indicator which is particularly useful for indicating or signaling that coloured, viscous liquids contained within a reservoir have been depleted.

One-piece, light transmissive liquid level indicators have been used to detect the level of liquids contained in many varieties of reservoirs. Perhaps the most widely known usage of such indicators (or "eyes" as they are sometimes called) is in the area of detection of the level of electrolyte within an automobile battery. A number of U.S. Patents, e.g., 1,883,971, 3,363,224, 3,383,917, 3,442,127 and 3,535,934, describe indicators which can be used in auto batteries (as well as other applications) to detect the level of colourless, non-viscous battery electrolyte without having to remove a cover from one of the battery cells. Other contexts in which such eye-type indicators have been used include automobile radiators or in dishwashing machines to detect the level of liquid compositions which are dispensed during the dishwashing cycle.

U.S. Patent 3,442,127 discloses a liquid level indicator which has superficial similarities to the present invention, for example the present invention and U.S. Patent No. 3,442,127 both illustrate a liquid level indicator with a domed head. U.S. No. 3,442, 127 does not disclose a red indicator for use in a liquid having a second colour, for example blue. It teaches that the stem reflector which is a coating of semi-transparent lacquer could be an illuminating bright red colour but it does not teach that the monitored liquid should be a second colour so that an interaction between the colours would create an "substantially black" image when the pointed end indicator is inserted into the liquid.

U.S. Patent No. 3,535,934 describes a liquid level indicator comprising an elongate member of light transmitting material, but does not teach a liquid level indicator having a large $r_h/r_s$ ratio which also includes a colour having a particular interactive effect with the liquid being monitored. Likewise, U.K. Patent No. 996,822 does not teach the interactive colour effect discussed above.

The present invention is distinguished from the above mentioned patents in that none of these references show a large lens-like head in combination with a prismatic end in further combination with a probe having a particular colour in relation to the colour of the liquid to be monitored.

Two problems have been encountered with conventional eye-type liquid level indicators. First, such indicators generally are not easily readable unless observed from a position very near to the their longitudinal axis. The problem of how to increase the radial distance away from the indicator axis from which the indicator may be read has been recognized in the patent literature (e.g. US—A—3,362,224).

Second, problems have often been encountered in determining whether the "eye" shows that the liquid level is or is not at a sufficient level. In such eye-type indicators there are generally two modes. The eye either appears brightly lit or very dimly lit depending upon whether the distal end of the eye is submerged in the liquid or is above it. Experience has taught that these two modes are visually sufficient for detecting the sufficient-depleted state of the reservoir but the connotation of what these two modes signify is confusing or lacking. In other words, the consumer has to decide whether the reservoir is empty when the eye is bright or when it is dim. This ambiguity of conventional liquid level indicators tends to confuse the observer. Since the observer checking a liquid level in a reservoir usually wants to be sure that the liquid therein is at the appropriate level, the liquid level is checked by some other means such as by removing a separate cap or cover. This tends to reduce the perceived utility of the indicator.

The present invention substantially reduces the problems encountered with conventional liquid level indicators.

Accordingly, the present invention provides a liquid level indicator (8) comprising a substantially spherical lens-like transparent head (10) having a generally convex exterior surface (11) and having a base radius of $r_h$, an elongate, transparent stem (20) extending from the head (10) having a substantially circular cross-section and having a radius of $r_s$, the stem having reflecting means (22) on its distal end, $r_h$ being at least 50% greater than $r_s$, characterised in that the reflecting means (22) is a pointed prism (23, 25) said prism being internally reflecting in air and in that the indicator is of a first colour such that when the prism is immersed in a liquid of a second colour, the indicator appears substantially black.

The present invention also forms part of a liquid level monitoring assembly, said liquid level indicator (8) being vertically disposed in a reservoir adapted to receive a liquid and said liquid level indicator (8), said indicator (8) appearing substantially said first colour when the prism (23, 25) is disposed above the surface of the liquid.

Detailed Description of the Invention

The invention will now be further described in connection with the accompanying drawings wherein like reference characters refer to the same parts throughout the several views and in which:

Figure 1 is a top view of an indicator of the present invention showing the indicator with a cooperating support means;

Figure 2 is a side view of the indicator of Figure 1;

Figure 3 is a side view of the indicator of Figures 1 and 2 with the support means removed;

Figure 4 is a cross-sectional view of the indicator of Figure 3 taken along line 3—3, the longitudinal axis of the indicator;

Figure 5 is a cross-sectional view of the head portion of the indicator of Figure 2 at twice its normal size; and

Figure 6 is a cross-sectional view of the head portion of a second embodiment of the invention at twice its normal size.

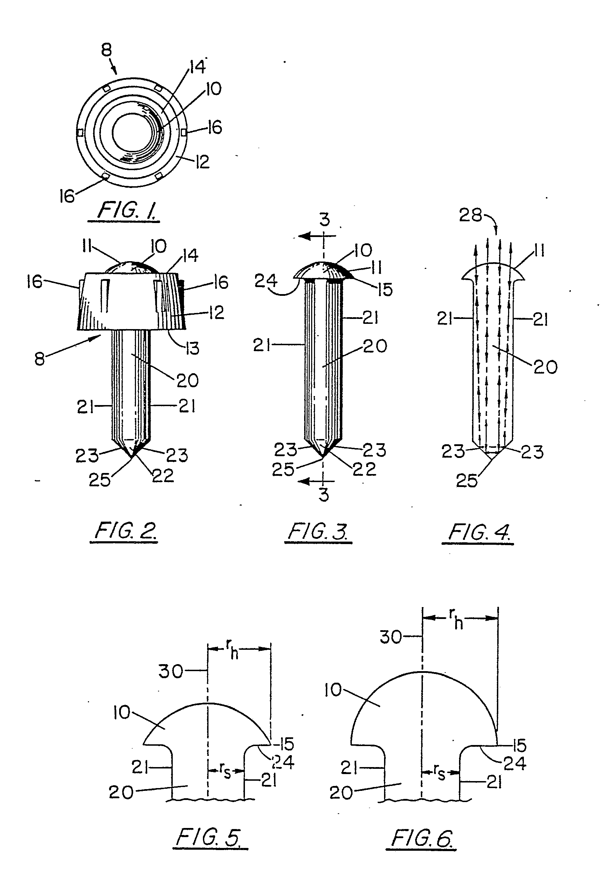

Thus there is shown in Figures 1 through 6 liquid level indicator 8 comprising a lens-like transparent head 10 and an elongated, transparent stem 20. In Figures 1 and 2, indicator 8 is depicted with a cooperating support means therefor. In this embodiment of the invention, the support means is generally a cylindrical, slightly tapered collar 12 having disposed therein an interior, essentially flat radial flange 14 which can be permanently affixed to the indicator 8 and which serves to support it vertically. Protruding radially from collar 12 are a plurality of exterior projections 16 which are primarily decorative but which tend to improve the ease with which the collar may be hand turned. Interior threads (not shown but the location thereof being indicated by arrow 13) may be molded or machined into collar 12 beneath flange 14. Such internally disposed, female threads on the collar will cooperate with exterior, male threads on a neck portion of a reservoir containing a liquid whose level is to be monitored. In this instance, the threads on the collar will screw onto the threads on the neck portion of the liquid reservoir, thus permitting the indicator-collar assembly to be securely threaded into place. The indicator depicted in Figures 1 and 2 is particularly adapted to detect the level of liquid in a reservoir of a dishwashing machine. Such a reservoir may contain, for example, a liquid additive which would be dispensed during the dishwashing cycle and would be located in the door of the dishmachine.

In Figures 2, 3 and 4 the head 10 and elongated, transparent stem 20 of the present indicator are more clearly shown. Stem 20 is essentially circular in cross-section throughout much of its length thus making its surface 21 cylindrical. On the end of the stem 20 opposite head 10 (i.e., on the distal end of stem 20) is an internally reflecting, pointed prism or prism section or portion 22. In this preferred embodiment of this invention, prism 22 is conical in configuration and comes to a point 25. The distal end of stem 20 (i.e., the prism end) may be of internally reflecting configurations such as triangular or square pyramids. The conical prism depicted is produced essentially by forming the end of the stem into a fairly pointed cone. In other words, the prism or prism section is created by the configuration of the distal end of the stem, there being no external coatings or reflectors thereon. By "internally reflecting" it is meant that light entering head 10 which is transmitted through head 10 into stem 20 will be essentially totally internally reflected at the surface 23 of prism 22 (when the prism is not immersed in the liquid). After being reflected from surface 23 (opposing portions of which are preferably disposed at about a 45 degree angle), the light will return to head 10 where it will emerge and be observed.

Particularly when the present invention is intended to detect the level of viscous liquids, it is necessary for prism 22 to be pointed, i.e., to come to an apex such as that of a cone or pyramid. After being immersed in a viscous liquid, an indicator having prism section or portion which is not pointed (e.g., which is rounded) tends to retain more of the liquid on the prism, i.e. distal, end of the indicator. This tends to permit more light to exit from the indicator into the retained liquid and thereby lessens the intensity of reflected light seen from the head. A pointed indicator tends to cause retained liquid to be collected at its point (by gravitational flow) in a droplet which then tends to fall into the reservoir therebelow. Furthermore, a pointed prism tends to reflect (internally) incident light more efficiently (than a rounded prism), thereby also increasing the brightness of the indicator when the reservoir is depleted.

Figure 3 is a view of the invention of Figures 1 and 2 omitting collar 12. In Figure 3 it is seen that the exterior surface 11 of head 10 is generally convex, and that head 10 has a planar base 15 which can permit stem 20 to be light transmissively bonded to it (the indicator may also be formed in one piece). As shown in Figure 4, stem 20 is light transmissively affixed to head 10 so that light entering head 10 (represented by arrows 28) will be transmitted thereto. As is more fully described below, the relationship between the radius of the stem $r_s$ and the radius of the base of the head $r_h$ provides a ridge or circular ring 24 which can be permanently mounted (e.g., by means of an adhesive) on an internal flange (e.g., flange 14) of a cooperating support means. In addition to providing means for supporting the indicator, the lens-like head of the present invention increases the radial distance from the axis of the indicator (line 3—3) from which the indicator may be observed. This occurs because the lens-like head gathers (and emits) more light than conventional indicators. Thus, the lens-like head of the present invention permits the indicator to be read from positions which are further radially disposed from the axis of the indicator.

As will be understood (particularly as described at columns 3 and 4 of U.S. Patent 3,362,224), the material of the indicator 8 has an index of refraction such that a substantial portion of those light rays from the sun or any artificial source which strike the head end surface 11 from above and from the side of the device are refracted and directed downwardly along the length of the stem 20. In other words, light rays passing into the device (such as indicated by light paths 28 of FIG. 4) travel until they meet an exterior surface of the device (e.g., 23). If the exterior surface is exposed to the air, the ray is reflected back into the device. This action holds true as long as there is a substantial angle of incidence between the direction of the light ray and the surface which it strikes and more particularly as long as the angle of incidence is in excess of a known critical angle. In any event, the function is such that a major portion of the light rays entering head 10 are directed along the length of the device to the reflecting surface 23 of the prism 22. If the reflecting surface 23 is exposed to the air, the light rays are reflected back toward head 10 along paths of travel such that they strike the head exterior surface 11 and pass out from the upper end of the indicator 8 and may be observed. If, on the other hand, the reflecting surface 23 is immersed in a liquid, most of the light rays pass through the surface 23 and into the liquid of the reservoir. In other words, most of the light rays are not reflected back toward the head of the device and thus the head appears dark. Thus, it is seen that when the distal prismatic end of stem 20 is immersed in liquid, the indicator device 8 appears dark and the liquid in the reservoir is at the desired level. When the liquid in the reservoir falls below prismatic end 22, exterior surface thereof 23 being exposed to the air, the device appears lighted.

As stated above, in the practice of the present invention, the radius of the base of the head $(r_h)$ must be greater than the radius of stem 20 $(r_s)$. In a preferred sense, $r_h$ should be at least 50 percent greater than $r_s$ (i.e., the ratio $r_h:r_s$ is at least 1.5:1). More preferably, $r_h$ should be 100% greater than $r_s$ (i.e., the ratio $r_h$ to $r_s$ should be 2:1 or greater). With reference to Figures 5 and 6, $r_h$ is seen to be equal to the radius of a circle defined by the intersection of a plane and a sphere of which head 10 may be a portion. The base radius of the head generally is measured in the plane wherein the head and stem intersect. The radius of the stem $(r_s)$ is defined to be the distance from the axis of the stem (dotted line 30) to its exterior surface 21. Figures 5 and 6 depict $r_h$ and $r_s$ for two different indicators. It should be understood that $r_h$ is not equal to the radius of a sphere from which head 10 may be a portion, since, in both Figures 5 and 6, head 10 may have been sliced from the same sphere.

As noted above, the present indicator is particularly useful in a dishwashing machine. Most domestic dishwashing machines sold today are equipped with a rinse aid dispenser (and thus a supply of rinse additive) which typically adds 0.5 to 1.0 ml of a special low foaming wetting agent to the rinse cycle of the machine. The rinse additive provides "sheeting" of water and minimizes filming and spotting of glasses, dishes and flatware. Another benefit of the wetting agent is the shortening of the drying time of the dishes.

For various reasons (including signal ambiguity), conventional liquid level indicator devices tend to be overlooked or ignored by the consumer. As a result, many dishwashing machines are operated without sufficient available rinse additive. This tends to reduce the performance of the dishwasher machine producing noticeable spotting and filming of the glassware and flatware. Once the spotting and filming on the dishes have built up to a noticeable and objectionable level, it may be necessary to clean the dishes with a special product (including an acidic product) to restore them to an acceptable condition. Additional treatment of spotted dishes with special products is inconvenient, thus making it important that a dependable and eye-catching low liquid level warning device be employed to motivate the consumer to refill the rinse aid dispenser before it is depleted.

The present invention derives from the concern that not only must the liquid level indicator be reliable but it must also carry a message of sufficient intensity and meaning for it to prompt the operator to refill the rinse additive dispenser whenever its supply of rinse additive is depleted. Surprisingly, the light intensity from the present liquid level indicator device appears to be especially intense even in moderately lit environments such as in a kitchen under artifical lighting conditions.

As noted above, it is important that the present indicator be of a first color and the liquid (whose level is to be detected) should be of a second color such that, when the prism end of the indicator is immersed in the liquid, the indicator will be essentially dark or black. When the liquid has been depleted below its desired level, light passing through the indicator will appear to be the first color. In a particularly preferred embodiment of the present invention, the indicator should be red or pink and the liquid whose level is to be detected should be blue or purple. In this embodiment the indicator will appear to be red when the liquid is depleted and it will appear to be black when sufficient liquid is contained within the reservoir. It is felt that the pink-black distinction between unfilled and filled will more clearly and unambiguously indicate to an observer that an action (i.e., filling of the reservoir) should be taken.

Indicators of the present invention may be manufactured from any suitable material which is light-transmissive and which can be suitably colored. Thus, acrylic resins, styrene, copolymers, polyolefinic resins with suitable color-absorbing materials therein are employed to make the present indicator. Particularly desirable are those materials which are light transmissive (i.e., transparent) and which exhibit minimal scatter of light transmitted therethrough. Such materials and suitable colorants will be well known to one skilled in the art of polymer fabrication. Colorants which may be used to impart a desired hue to the present indicators if manufactured from plastics are listed in e.g., "Modern Plastics Encyclopedia" 1978—79 edition, pp. 660 to 672.

In the dishmachine environment in which the present invention is used, in addition to having the necessary optical properties, the material of which the indicator is made has to be resistant to acid and basic chemical attack. Rinse additives (such as the rinse additive commercially available from Economics Laboratory, Inc. under the trade designation "Jet Dry") are normally neutral in pH but the dishwashing detergents are moderately alkaline and therefore require an indicator material that is resistant to surfactants as well as alkaline chemical attack. Where indicators are to be used in dishmachines, the indicator material (as well as any support means or exposed reservoir portions) will necessarily need to be thermally stable at the highest water temperature to which they are exposed. A particularly preferred resin from which the present indicators may be manufactured (e.g., by injection molding) is believed to be a copolymer of styrene and methylmethacrylate and is sold under the designation "NAS" by the Richardson Company.

Various modifications and alterations of the invention will become apparent to those skilled in the art without departing from the scope of the claims and it should be understood that this invention is not to be limited to the illustrative embodiments set forth herein.

## Claims

1. A liquid level indicator (8) comprising a substantially spherical lens-like transparent head (10) having a generally convex exterior surface (11) and having a base radius of $r_h$,

an elongate, transparent stem (20) extending from the head (10) and having a substantially circular cross-section and having a radius of $r_s$, the stem having reflecting means (22) on its distal end, $r_h$ being at least 50% greater than $r_s$, characterised in that the reflecting means (22) is a pointed prism (23, 25) said prism being internally reflecting in air and in that the indicator is of a first colour such that when the prism is immersed in a liquid of a second colour, the indicator appears substantially black.

2. An indicator in accordance with claim 1, wherein $r_h$ is 100% greater than $r_s$.

3. An indicator in accordance with claim 1, wherein the prism is conical.

4. An indicator in accordance with claim 1 wherein the prism is triangular pyramidal.

5. An indicator in accordance with claim 1 wherein the prism is square pyramidal.

6. An indicator in accordance with claim 1 wherein said first colour is substantially red.

7. A liquid level indicator in accordance with any one of claims 1 to 6 wherein said liquid level indicator (8) is vertically disposed in a reservoir adapted to receive a liquid and said liquid level indicator (8), said indicator (8) appearing substantially said first colour when the prism (23, 25) is disposed above the surface of the liquid.

8. A liquid level indicator in accordance with claim 7 characterised in that the reservoir contains a liquid of said second colour.

9. A liquid level indicator in accordance with claim 8 characterised in that the indicator is substantially red and the liquid is substantially blue.

10. A liquid level indicator in accordance with any one of claims 7 to 9, characterised in that the reservoir is a rinse additive reservoir on a dishmachine.

11. A liquid level indicator in accordance with claim 7 further characterised in that said first colour is substantially red and said liquid of a second colour is substantially blue such that the indicator (8) appears substantially black when the prism (22) of the indicator (8) is disposed beneath the surface of said liquid of the second colour and appears substantially red when the prism (22) is disposed above the surface of said liquid.

## Revendications

1. Un indicateur (8) de niveau liquide comprenant une tête (10) transparente de forme analogue à une lentille à peu près sphérique ayant une surface (11) extérieure à peu près convexe et ayant un rayon de base de $r_h$, une tige (20) transparente allongée de section transversale à peu près circulaire s'étendant à partir de la tête (10) et ayant un rayon de $r_s$, la tige étant munie d'un dispositif de réflexion (22) au niveau de son extrémité distale, $r_h$ étant au moins 50% plus grand que $r_s$, caractérisé en ce que le dispositif de réflexion (22) est un prisme pointu (23, 25), ledit prisme étant à réflexion interne dans l'air et en ce que l'indicateur est d'une première couleur de telle façon que quand le prisme est immergé dans le liquide qui est d'une deuxième couleur, l'indicateur apparaisse à peu près noir.

2. Un indicateur suivant la revendication 1, caractérisé en ce que $r_h$ est de 100% plus grand que $r_s$.

3. Un indicateur suivant la revendication 1, caractérisé en ce que le prisme est conique.

4. Un indicateur suivant la revendication 1, caractérisé en ce que le prisme est une pyramide à base triangulaire.

5. Un indicateur suivant la revendication 1, caractérisé en ce que le prisme est une pyramide à base carrée.

6. Un indicateur suivant la revendication 1, caractérisé en ce que ladite première couleur est à peu près rouge.

7. Un indicateur de niveau liquide suivant l'une quelconque des revendications 1 à 6, caractérisé en ce que ledit indicateur (8) de niveau liquide est disposé verticalement dans un réservoir adapté pour recevoir un liquide et ledit indicateur (8) de niveau liquide, ledit indicateur (8) apparaissant à peu près de ladite première couleur quand le prisme (23, 25) est disposé au-dessus de la surface du liquide.

8. Un indicateur de niveau liquide suivant la revendication 7, caractérisé en ce que le réservoir contient un liquide qui est de ladite deuxième couleur.

9. Un indicateur de niveau liquide suivant la revendication 8, caractérisé en ce que l'indicateur est à peu près rouge et en ce que le liquide est à peu près bleu.

10. Un indicateur de niveau liquide suivant l'une quelconque des revendications 7 à 9, caractérisé en ce que le réservoir est un réservoir d'additif de rinçage d'une machine à laver la vaisselle.

11. Un indicateur de niveau liquide suivant la revendication 7, caractérisé en ce que ladite première couleur est à peu près rouge et ledit liquide qui est de la deuxième couleur est à peu près bleu de telle façon que l'indicateur (8) apparaisse à peu près noir quand le prisme (22) de l'indicateur (8) est disposé en dessous de la surface dudit liquide qui est de la deuxième couleur et apparaisse à peu près rouge quand le prisme (22) est disposé au-dessus de la surface dudit liquide.

**Patentansprüche**

1. Flüssigkeitsspiegel-Anzeigevorrichtung (8) mit einem im wesentlichen kugelförmigen linsenartigen durchsichtigen Kopf (10), der eine allgemein konvexe Außenfläche (11) mit einem Grundradius von $r_h$ hat, wobei ein länglicher transparenter Schaft (20) vom Kopf (10) ausgeht und einen im wesentlichen kreisförmigen Querschnitt mit Radius $r_s$, hat, wobei der Schaft am äußeren Ende eine Reflektiereinrichtung (22) aufweist und wenigstens 50% größer als $r_s$ ist, dadurch gekennzeichnet, daß die Reflektiereinrichtung (22) ein mit einer Spitze versehenes Prisma (23, 25) ist, welches im Inneren in Luft reflektiert, und daß die Anzeigevorrichtung aus einer ersten Farbe besteht, so daß, wenn das Prisma in eine Flüssigkeit eine zweite Farbe eintaucht, die Anzeigevorrichtung im wesentlichen schwarz erscheint.

2. Anzeigevorrichtung nach Anspruch 1, dadurch gekennzeichnet, daß $r_h$ größer als $r_s$ ist.

3. Anzeigevorrichtung nach Anspruch 1, dadurch gekennzeichnet, daß das Prisma konisch ausgebildet ist.

4. Anzeigevorrichtung nach Anspruch 1, dadurch gekennzeichnet, daß das Prisma dreieckig pyramidenförmig ausgebildet ist.

5. Anzeigevorrichtung nach Anspruch 1, dadurch gekennzeichnet, daß das Prisma quadratisch pyramidenförmig ausgebildet ist.

6. Anzeigevorrichtung nach Anspruch 1, dadurch gekennzeichnet, daß die erste Farbe im wesentlichen rot ist.

7. Flüssigkeitsspiegel-Anzeigevorrichtung nach einem der Ansprüche 1 bis 6, dadurch gekennzeichnet, daß die Flüssigkeitsspiegel-Anzeigevorrichtung (8) senkrecht in einem Vorratsbehälter zur Aufnahme einer Flüssigkeit und der Flüssigkeitsspiegel-Anzeigevorrichtung (8) angeordnet ist, wobei die Anzeigevorrichtung (8) im wesentlichen die erste Farbe zeigt, wenn sich das Prisma (23, 25) über den Flüssigkeitsspiegel befindet.

8. Flüssigkeitsspiegel-Anzeigevorrichtung nach Anspruch 7, dadurch gekennzeichnet, daß der Behälter eine die zweite Farbe aufweisende Flüssigkeit enthält.

9. Flüssigkeitsspiegel-Anzeigevorrichtung nach Anspruch 8, dadurch gekennzeichnet, daß die Anzeigevorrichtung im wesentlichen rot und die Flüssigkeit im wesentlichen blau ist.

10. Flüssigkeitsspiegel-Anzeigevorrichtung nach einem der Ansprüche 7 bis 9, dadurch gekennzeichnet, daß der Behälter ein Vorratsbehälter für Spülmittel einer Geschirrspülmaschine ist.

11. Flüssigkeitsspiegel-Anzeigevorrichtung nach Anspruch 7, dadurch gekennzeichnet, daß die erste Farbe im wesentlichen rot und die eine zweite Farbe aufweisende Flüssigkeit im wesentlichen blau ist, so daß die Anzeigevorrichtung (8) im wesentlichen schwarz erscheint, wenn das Prisma (22) der Anzeigvorrichtung (8) sich unter der Oberfläche der die zweite Farbe aufweisenden Flüssigkeit befindet, und im wesentlichen rot erscheint, wenn das Prisma sich über der Oberfläche dieser Flüssigkeit befindet.

FIG. 1.

FIG. 2.

FIG. 3.

FIG. 4.

FIG. 5.

FIG. 6.